# EUROPEAN PATENT APPLICATION

(11) **EP 1 501 206 A1**
(43) Date of publication of application: **26.01.2005**
(21) Application number: 03720572.1
(22) Date of filing: 11.04.2003
(51) Int. Cl.: H04B 7/00, H04B 10/12

(54) **ACCESS METHOD AND CONNECTION SYSTEM BY MEANS OF OPTICAL FIBER USING DWDM/SCM HYBRID TECHNIQUES BETWEEN BASE STATIONS AND REMOTE ANTENNAS IN A RADIOCOMMUNICATION SYSTEM**

(30) Priority: 12.04.2002 ES 200200860
(71) Applicant: Telefonica, S.A., 28013 Madrid (ES)
(72) Inventor: CUCALA GARCIA, Luis, Telefonica, S.A., 28013 MADRID (ES); WARZANSKYJ GARCIA, Wsewolod, Telefonica, S.A., 28013 MADRID (ES)
(74) Representative: Carpintero Lopez, Francisco
(86) International application number: PCT/ES2003/000168
(87) International publication number: WO 2003/088518

(57) **Abstract**

It consists of the connection by optical fibre using DWDM/SCM hybrid techniques between base stations and remote antennas in a radiocommunications system, which radiocommunications system is formed by:
- one or several base stations.
- one or several remote antennas.
- one or several base station transponders.
- one or several remote antenna transponders.

The base stations communicate with the remote antennas through optical fibre using the base station and remote antenna transponders to carry out the necessary electro-optical conversations.

These transponders are interconnected forming an optical fibre network in ring configuration.

## Description

### FIELD OF APPLICATION

This invention describes an optical fibre connection system using DWDM/SCM hybrid techniques between base stations and remote antennas in a radiocommunications system, as well as access method.

The object of this invention is to provide a system of transparent connection between base stations and remote antennas for a radiocommunications system by optical fibre networks in point to multipoint structure with 1+1 protection mechanisms.

The field of application is that of telecommunications in general, and more specifically in the cellular communications systems such as GSM, DCS and UMTS.

### CURRENT STATE OF THE ART

The technique of radio over fibre (ROF) is known for the connection between base stations and remote antennas in cellular communications. In it, the output radiofrequency signal of a base station modulates a laser source, the resulting light signal being transmitted through an optical fibre to a remote antenna where a photodiode transforms said optical signal once more into an electrical radiofrequency signal before being transmitted by the remote antenna. In like fashion, the radiofrequency signal received by a remote antenna is transmitted to the base station by means of an optical fibre, for which an electro-optical conversion is necessary.

Various systems of the radio-over-fibre type are known, which are characterised by the number of optical fibres employed, the number of carriers transmitted by the fibre, the maximum length of the optical fibres used, etc. Various multinational companies market these ROF systems for cellular applications.

ROF systems are known which use SCM multiplexing in the downlink direction and TDMA techniques in the uplink direction. Systems are also known which use two different optical carriers to separate the uplink and the downlink directions.
Using DWDM/SCM hybrid techniques is not known in the state of the art for the connection over optical fibre between base stations and remote antennas in a radiocommunications system, such as is an object of the proposed invention.

### DESCRIPTION OF THE INVENTION

The present invention discloses the architecture of the optical fibre connection system using DWDM/SCM hybrid techniques between base stations and remote antennas in a radiocommunications system, and which is constituted by a base station, one or several remote antennas, a base station transponder and one or several remote antenna transponders.

Specifically, the present system is configured so that the DWDM technique is used in the uplink direction from the remote antennas to the base stations and the SCM in the downlink direction from the base stations to the remote antennas.

A complete system includes typically the presence of several base stations and associated transponders, remote antennas and associated transponders, and remote radio terminals.

The base station will communicate with the remote antennas through a connection via optical fibre, using the base station transponders and remote antenna to carry out the necessary electro-optical conversions. The transponders are interconnected forming an optical fibre network in ring configuration.

The base station will be in charge of transmitting and receiving all the communication channels in accordance with the selected radiocommunications standard (for example GSM, DCS, UMTS).

The remote antenna is the physical device for transmission and reception of the radio signal through which the terminals will be connected to the rest of the radiofrequency communications system.

Among the main characteristics of the optical fibre connection system using DWDM/SCM hybrid techniques between base stations and remote antennas in a radiocommunications system, are:
- The radiofrequency interfaces of one or several base stations are connected to a network element termed base station transponder, which constitutes the head-end node of an optical fibre network.
- The radiofrequency interface of each remote antenna is connected to a network element termed remote antenna transponder, which constitutes an element of the optical fibre network.
- All the transponders are elements of an optical fibre network in ring configuration, through which they are interconnected. Although the optical fibre network in ring configuration is that preferred in the proposed invention, the invention is also applicable to other topologies such as tree networks or ring-tree hybrid networks.
- The optical fibre network allows incorporation of a 1+1 protection mechanism, which maintains the integrity of the communication through the optical fibre network in the event of a breakage or fault in some point of said network.
- In the downlink direction from the base stations to the remote antennas, the signal of the base station is constituted as a group of carriers separated in frequency, which signal modulates a single optical carrier in the base station transponder (for example in the window of 1550 nm).
- In the uplink direction from the remote antennas to the base station, each antenna signal is modulated by the associated transponder on a single different carrier for each transponder.
- Just as in any optical fibre network, optical amplifiers will be used if necessary to compensate for the signal losses in the transmission through the optical fibre network, both in the uplink direction and in the downlink.
- The extraction of signals in the remote transponders is carried out by means of a passive optical coupler.
- In the downlink direction a signalling channel is transmitted on a previously specified carrier. This channel informs each remote transponder of the carriers assigned to the associated remote antenna.
- It is possible to reuse or share the optical fibre network with other services foreign to the system described by means of wave division multiplexers which separate the optical bands used by each system.

### BRIEF DESCRIPTION OF THE DRAWINGS

Figure 1 shows the architecture of the optical fibre connection system using DWDM/SCM hybrid techniques between base stations and remote antennas in a cellular communications system.
Figure 2 shows the architecture of the electro-optical transponder module near to the base station.
Figure 3 shows the architecture of the module electro-optical transponder near to the remote antenna.
Figure 4 shows the physical connection between the entities of the proposed optical fibre connection system.
Figure 5 shows the 1+1 protection mechanism between the entities of the proposed optical fibre connection system.

### DETAILED DESCRIPTION OF THE INVENTION

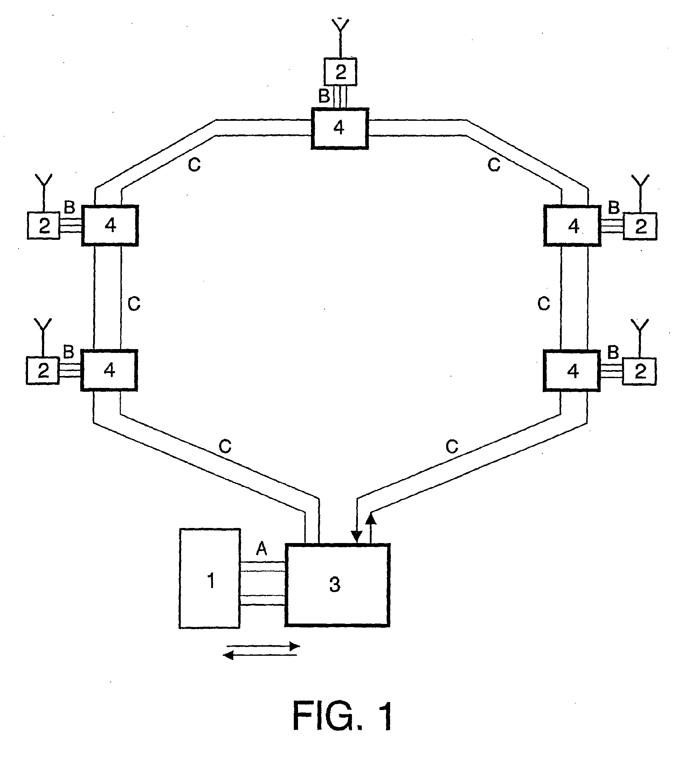

Figure 1 shows the entities involved in the architecture of the optical fibre connection system using DWDM/SCM hybrid techniques between base stations and remote antennas in a radiocommunications system: base station (1), remote antenna (2), base station transponder (3) and remote antenna transponder (4).

One or several remote antennas (2) can be present with their corresponding associated antenna transponders (3). A complete system includes typically the presence of several base stations (1) and associated transponders (3), remote antennas (2) and associated transponders (4), and remote radio terminals. In figure 1 all the elements mentioned are not detailed, this not being considered necessary from the point of view of describing the invention.

The base station (1) will communicate with the remote antennas (2) through a connection via optical fibre. For this the electro-optical conversion is necessary between electrical signals coming from the base stations and remote antennas, and the optical signals used in the optical fibres, which is carried out by the base station transponders (3) and the remote antenna transponders (4). The transponders (3 and 4) are interconnected forming an optical fibre network in ring configuration.

The base station (1) will be in charge of transmitting and receiving all the communication channels in accordance with the selected radiocommunications standard (for example GSM, DCS, UMTS). The base station (1) communicates with the base station transponder (3) to which it is linked via coaxial cable (A) by means of electrical communication at radiofrequency.
The remote antenna (2) is the physical device for transmitting and receiving the radio signal through which the terminals will be connected to the rest of the radiofrequency communications system. The remote antenna (2) communicates with the remote antenna transponder (4) to which it is linked via coaxial cable (or optical fibre) (B) by means of electrical communication at radiofrequency.

The purpose of the base station transponder (3) is the adaptation of the electrical signals of the interface with the associated base station (1) and the optical signals in the optical fibre interfaces (C) used by the network of transponders (3 and 4).

The purpose of the remote antenna transponder (4) is the adaptation of the signals of the interface with the remote antenna (2) and the optical signals in the optical fibre interfaces (C) used by the network of transponders (3 and 4).

Among the main characteristics of the optical fibre connection system using DWDM/SCM hybrid techniques between base stations and remote antennas in a radiocommunications system, are:
- The radiofrequency interfaces of one or several base stations (1) are connected to a network element termed base station transponder (3), which constitutes the head-end node of an optical fibre network.
- The radiofrequency interface of each remote antenna (2) is connected to a network element termed remote antenna transponder (4), which constitutes an element of the optical fibre network.
- All the transponders (3 and 4) are elements of an optical fibre network in ring configuration, through which they are interconnected. Although the optical fibre network in ring configuration is that preferred in the proposed invention, the invention is also applicable to other topologies such as tree networks or ring-tree hybrid networks.
- The optical fibre network allows the incorporation of a 1+1 protection mechanism, which maintains the integrity of the communication through the optical fibre network in the event of a breakage or fault in some point of said network.
- In the downlink direction from the base station to the remote antennas, the signal of the base station is constituted as a group of carriers separated in frequency, which modulates a single optical carrier in the base station transponder (for example in the window of 1550 nm).
- In the uplink direction from the remote antennas to the base station, each antenna signal is modulated by the associated transponder on a single different carrier for each transponder.
- Just as in any optical fibre network, optical amplifiers will be used if necessary to compensate for the signal losses in the transmission through the optical fibre network, both in the uplink direction and in the downlink.
- The extraction of signals in the remote transponders (4) is carried out by means of a passive optical coupler.
- In the downlink direction a signalling channel is transmitted on a previously specified carrier. This channel informs each remote transponder (4) of the carriers assigned to the associated remote antenna (2).
- It is possible to reuse or share the optical fibre network with other services foreign to the system described by means of wave division multiplexers which separate the optical bands used by each system.

In figure 1, the letters A to C denote the interfaces between the various entities. These interfaces are:
A- Interface between the base station (1) and the base station transponder (3). This interface is via coaxial cable by means of electrical communication at radiofrequency. The radiofrequency signal will be constituted by the group of communications to or from all the remote antennas (4).
B- Interface between the remote antenna (2) and the remote antenna transponder (4). This interface is via coaxial cable (or optical fibre) by means of electrical communication at radiofrequency. The radiofrequency signal will be constituted only by the communication assigned to the remote antenna (4).
C- Optical fibre interface between all the transponder elements (3 and 4) of the optical network. It can be in a ring, linear, tree-shaped or any other. It can have 1+1 protection mechanisms incorporated.

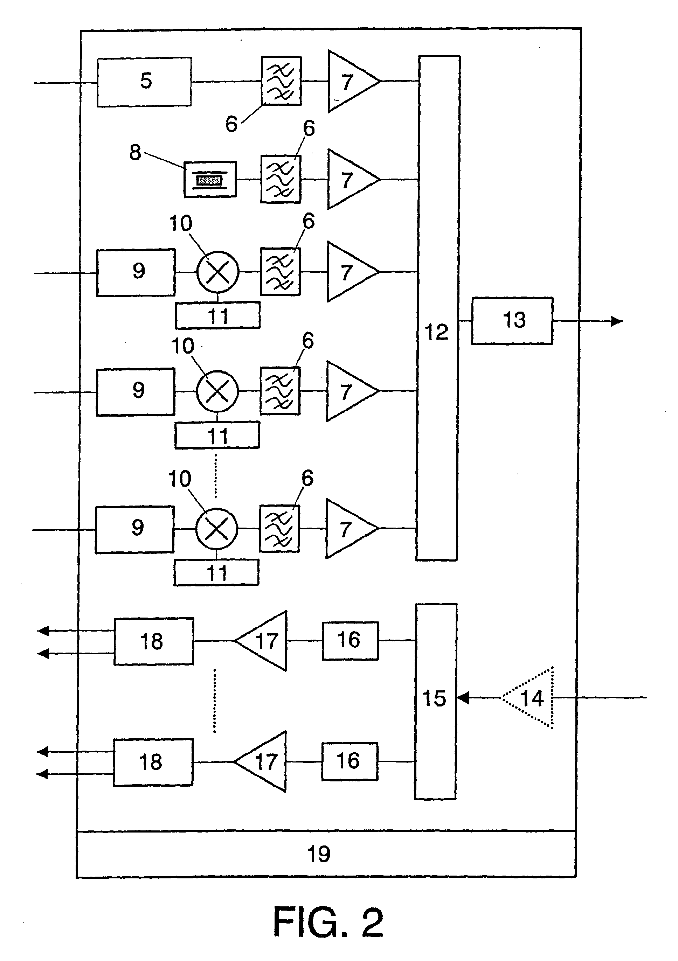

Figure 2 shows the entities involved in the architecture of the electro-optical transponder module (3) near to the base station: signalling channel generator (5), band-pass filters (6), amplifiers (7), reference frequency generator (8), protection circuits (9), converters or mixers (10), carrier synthesizers (11), channel mixer or adder (12), laser transmitter (13), optical receiver amplifier (14), WDM wavelength demultiplexer (15), photodetectors (16), receiver amplifiers (17), signal separators (18) and control module (19).

In the downlink connection to the remote antennas (2), the base station transponder (3) comprises a group of frequency converter chains (10) which translate each of the assigned radiofrequency channels (for example GSM, DCS, UMTS) to the channel assigned in the optical fibre transmission. Each of the channels will be located on a different sub-carrier (11), and all of them will form the carrier which modulates the laser transmission (13).

In the uplink connection to the base station (1), the different channels coming from each remote antenna (2) are separated in the wavelength demultiplexer (15). Each channel is photodetected (16) and amplified (17), a radiofrequency signal being obtained which is a replica of that sent by the corresponding remote antenna (2).

Although it is not indicated in the figure, each reception channel extracts a telemetry signal coming from the remote antenna transponder (4) which contains information on transmission alarms.

The control module (19) carries out, among other functions, the monitoring of the frequencies of the sub-carriers employed, information of the signalling channel and information on alarms. This circuit communicates with the exterior through a monitoring interface.

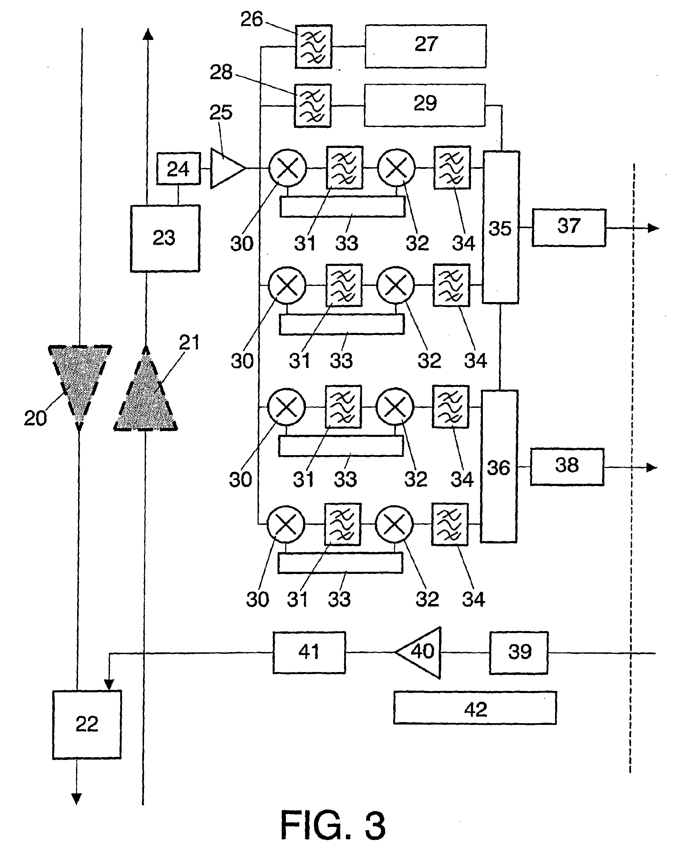

Figure 3 shows the entities involved in the architecture of the electro-optical transponder module near to the remote antenna: the uplink connection optical amplifier (20), the downlink connection optical amplifier (21), the uplink connection coupler (22), the downlink connection coupler (23), photodetector (24), receiver amplifier (25), reception filter for signalling channel (26), the signalling channel receiver (27), reception filter for the reference clock recovery circuit (28), reference clock recovery circuit (29), intermediate frequency mixer (30), intermediate frequency filter (31), secondary mixer (32), secondary filter (34), frequency synthesizers (33), channel mixer or adder (35 and 36), antenna laser transmitters (37 and 38), antenna photodetector (39), amplifier (40), laser transmitter (41) and control module (42).

The remote antenna transponder connects the two optical fibres (C) of the transponder ring to the remote antenna module through also, for example, another optical fibre interface.

The signal coming from the base station (1) through the downlink connection of the optical fibre ring is inserted in an optical coupler (23) from which the input signal to the remote antenna transponder (4) is extracted. This signal is photodetected (24) and amplified (25). The radiofrequency carriers are translated into the required bands through the mixer assembly (30 and 32), filters (31 and 34) and synthesizers (33). All these bands modulate a laser transmitter which is applied to the interface with the remote antenna (2).

The control circuit (42) extracts its instructions from the signalling channel (27), and the reference clock signal is extracted by the reference clock extractor circuit (29).

In the uplink direction to the base station (1), the situation is similar except in this case frequency conversions are not necessary. The optical signal is translated transparently from the remote antenna interface (for example 1300 nm) to the interface with the optical fibre ring of the transponder network (for example 1500 nm).

The use of amplifiers in the optical fibre ring network of the transponders, is necessary to avoid an excessive loss of power in the signal transmitted through the optical fibres. By way of example, for GSM signals it is necessary to use amplifiers every fifteen remote antenna transponders (4). Also, in the uplink direction, to prevent the signals coming from the remote antennas having very different power levels, the coupling factor in the transponder couplers can be different between the different transponder groups.

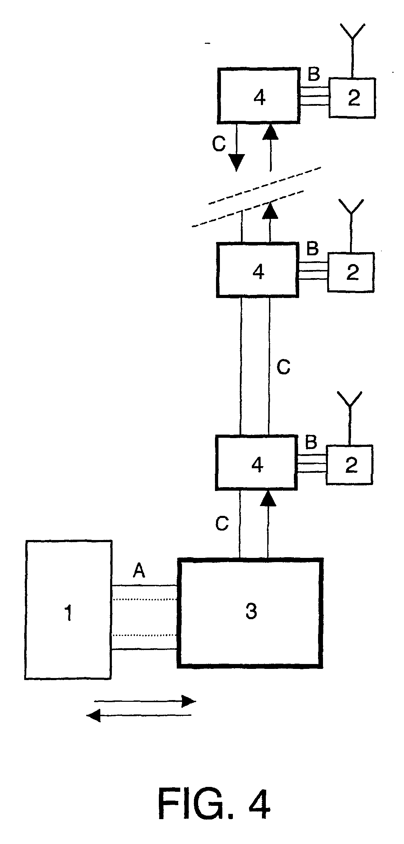

Figure 4 shows the physical connection between the entities of the proposed optical fibre connection system described in figure 1.

Just as has been described in figure 1, the topology of the optical fibre layout is a ring. However, from the physical point of view, the connections correspond to a group of two fibres as is detailed in figure 4, since the return from the uplink or downlink connection need not go back to the base station transponder, since communication with any transponder is possible.

Although figure 4 shows the simplest case in which the return from the uplink and the downlink connection need not be to the base station transponder, this can be of interest in various situations, forming a true optical fibre ring.

In the first place the ring configuration is useful for the purpose of monitoring the optical transmission quality. In the downlink connection, the signal sent by the transponder of the base station (3) will return again to said transponder after having passed through all the remote antenna transponders and the entire optical fibre downlink ring. In the uplink connection a signal, a reference carrier, could have been injected for quality tests. In any case, from the analysis of the received signal the quality of the operation of the amplifiers and the signal losses in the fibre system can be checked.

In the second place the ring configuration allows incorporation of protection mechanisms against failures, such as the physical breaking of the fibre ring or a fault in any intermediate optical amplifier.

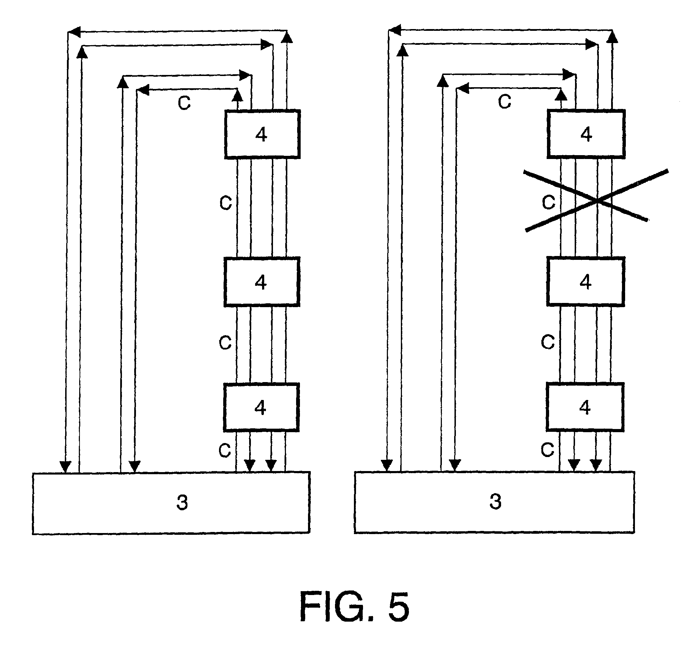

Figure 5 shows the 1+1 protection mechanism between the entities of the proposed optical fibre connection system described in figure 1.

All the transponders transmit simultaneously over two different optical fibres and in opposing directions, both for the uplink connection and the downlink. The receivers receive from a single optical fibre termed the main optical fibre, but at the same time they monitor the quality of the signal received via the other optical fibre termed the standby optical fibre. In the event of detecting a failure in reception from the main optical fibre, changeover to the standby takes place in reception.

### DEFINITIONS AND ABBREVIATIONS

- DCS: Digital Cellular System of mobile telecommunications which uses the 1800 MHz frequency band.
- DWDM: Dense Wavelength Division Multiplexing.
- GSM: Radiofrequency cellular communications system standardized and regulated by ETSI (Global System for Mobile communication).
- MHz: Megahertz. Electric frequency unit of measurement.
- Nm: Nanometre(s). Wavelength unit of measurement.
- ROF: Radio over fibre.
- SCM: Sub-Carrier Multiplexing.
- TDMA: Time division multiple access. System employed to separate the different user data channels as for example in the GSM cellular communication system.
- UMTS: Cellular universal mobile telecommunications system. Third generation cellular communications system.
- WDM: Wavelength Division Multiplexing.

## Claims

1. Optical fibre connection system using DWDM/SCM hybrid techniques between base stations and remote antennas in a radiocommunications system **characterised by** using DWDM in the uplink direction from the remote antennas to the base stations and SCM in the downlink direction from the base stations to the remote antennas.

2. Optical fibre connection system using DWDM/SCM hybrid techniques between base stations and remote antennas in a radiocommunications system according to claim 1 **characterised by** having base stations for radiocommunications.

3. Optical fibre connection system using DWDM/SCM hybrid techniques between base stations and remote antennas in a radiocommunications system according to claims 1 and 2 **characterised by** having transponders which match the optical interfaces with the optical fibre network using DWDM/SCM hybrid techniques to the electrical interfaces with the base stations.

4. Optical fibre connection system using DWDM/SCM hybrid techniques between base stations and remote antennas in a radiocommunications system according to claim 1 **characterised by** having remote antennas for radiocommunications.

5. Optical fibre connection system using DWDM/SCM hybrid techniques between base stations and remote antennas in a radiocommunications system according to claims 1 and 4 **characterised by** having transponders which match the optical interfaces with the optical fibre network using DWDM/SCM hybrid techniques to the electrical interfaces with the remote antennas.

6. Optical fibre connection system using DWDM/SCM hybrid techniques between base stations and remote antennas in a radiocommunications system according to claims 1 to 5 **characterised by** using 1+1 protection techniques in the optical fibre links between the base stations and the remote antennas.

7. Optical fibre connection system using DWDM/SCM hybrid techniques between base stations and remote antennas in a radiocommunications system according to claims 1 to 5 **characterised by** using optical amplifiers or regenerators in the optical fibre network which allow compensation for the signal attenuation suffered in transmission.

8. Optical fibre connection system using DWDM/SCM hybrid techniques between base stations and remote antennas in a radiocommunications system according to claims 1 to 5 **characterised by** reusing or sharing the optical fibre network with services different to the proposed system.

9. Access method of the optical fibre connection system using DWDM/SCM hybrid techniques between base stations and remote antennas in a radiocommunications system **characterised by** using DWDM in the uplink direction from the remote antennas to the base stations and SCM in the downlink direction from the base stations to the remote antennas.

10. Access method of the optical fibre connection system using DWDM/SCM hybrid techniques between base stations and remote antennas in a radiocommunications system according to claim 9 **characterised by** having base stations for radiocommunications.

11. Access method of the optical fibre connection system using DWDM/SCM hybrid techniques between base stations and remote antennas in a radiocommunications system according to claim 9 **characterised by** having transponders which match the optical interfaces with the optical fibre network using DWDM/SCM hybrid techniques to the electrical interfaces with the base stations.

12. Access method of the optical fibre connection system using DWDM/SCM hybrid techniques between base stations and remote antennas in a radiocommunications system according to claims 9 and 10 **characterised by** having remote antennas for radiocommunications.

13. Access method of the optical fibre connection system using DWDM/SCM hybrid techniques between base stations and remote antennas in a radiocommunications system according to claims 9, 10 and 12 **characterised by** having transponders which match the optical interfaces with the optical fibre network using DWDM/SCM hybrid techniques to the electrical interfaces with the remote antennas.

14. Access method of the optical fibre connection system using DWDM/SCM hybrid techniques between base stations and remote antennas in a radiocommunications system according to claims 9 to 13 **characterised by** using 1+1 protection techniques in the optical fibre connections between the base stations and the remote antennas.

15. Access method of the optical fibre connection system using DWDM/SCM hybrid techniques between base stations and remote antennas in a radiocommunications system according to claims 9 to 13 **characterised by** using optical amplifiers or regenerators in the optical fibre network which allow compensation for the signal attenuation suffered in transmission.

16. Access method of the optical fibre connection system using DWDM/SCM hybrid techniques between base stations and remote antennas in a radiocommunications system according to claims 9 to 13 **characterised by** reusing or sharing the optical fibre network with services different to the proposed system.
